Europäisches Patentamt

European Patent Office

Office européen des brevets

(19)

(11) Veröffentlichungsnummer: **0 171 467**
**B1**

(12) **EUROPÄISCHE PATENTSCHRIFT**

(45) Veröffentlichungstag der Patentschrift:
**22.06.88**

(21) Anmeldenummer: **84116365.2**

(22) Anmeldetag: **27.12.84**

(51) Int. Cl.⁴: **H 01 C 7/00** // G01L1/22,
G01B7/20

(54) Elektrischer Widerstand.

(30) Priorität: **11.08.84  DE 3429649**

(43) Veröffentlichungstag der Anmeldung:
**19.02.86 Patentblatt 86/8**

(45) Bekanntmachung des Hinweises auf die Patenterteilung:
**22.06.88 Patentblatt 88/25**

(84) Benannte Vertragsstaaten:
**CH DE FR GB LI NL**

(56) Entgegenhaltungen:
**EP - A - 0 035 351**

**CHEMICAL ABSTRACTS, Band 83, Nr. 18, 3. November
1975, Nr. 156775f, Columbus, Ohio, US
32nd ELECTRONIC COMPONENTS CONFERENCE,
10.-12. Mai 1982, Seiten 481-487, Sheraton Harbor Island
Hotel, San Diego, CA, US, IEEE, New York, US; T. KAMEI
u.a.: "Structural and electrical properties of Cr-Si-O
thin film resistors"
THIN SOLID FILMS, Band 101. Nr. 2, März 1983, Seiten
167-178, Laussanne, CH; M. MILOSAVLJEVIC u.a.:
"Electrical properties of 70wt.%Cr-30wt.%SiO thin
films"**

(73) Patentinhaber: **VDO Adolf Schindling AG,
Gräfstrasse 103, D-6000 Frankfurt/Main (DE)**

(72) Erfinder: **Blessing, Rolf, Dr., Pfarrgasse,
D-6384 Schmitten III (DE)**
Erfinder: **Adamitzki, Wolfgang, Bad Sodener Strasse 18,
D-6231 Sulzbach/Ts. (DE)**

(74) Vertreter: **Klein, Thomas, Dipl.-Ing. (FH), Sodener
Strasse 9 Postfach 6140, D-6231 Schwalbach a. Ts. (DE)**

## Beschreibung

Die Erfindung betrifft einen elektrischen Widerstand mit einer auf einen Träger aufgebrachten Widerstandsschicht aus einem Cermet-Werkstoff sowie dieser Widerstandsschicht zugeordneten Kontaktschichten, wobei zwischen Träger und Widerstandsschicht bzw. auf der dem Träger abgewandten Seite der Widerstandsschicht eine elektrisch nicht leitende Schicht angeordnet ist und wobei der Widerstand einer Wärmebehandlung unterzogen ist.

Ein derartiger elektrischer Widerstand ist aus 32nd ELECTRONIC COMPONENTS CONFERENCE, 10.–12. Mai 1982, Seiten 481–487, Sheraton Harbor Island Hotel, San Diego CA, US, IEEE, New York, US; T. Kamei u.a: «Structural and electrical properties of Cr–Si–O thin film resistors» bekannt.

Dabei ist zwischen dem Träger und der Widerstandsschicht eine nichtmetallische Isolierschicht angeordnet.

Werden derartige bekannte elektrische Widerstände als Dehnungsmessstreifen verwandt, so besteht zum einen das Problem, dass sich nur Empfindlichkeiten mit einem K-Faktor von etwa 5 erreichen lassen, was einen erhöhten Aufwand bei der angeschlossenen Auswerteschaltung bedingt. Weiterhin besteht auch das Problem, dass man nur eine geringe Reproduzierbarkeit der K-Werte erreicht.

Aufgabe der Erfindung ist es daher, einen elektrischen Widerstand nach dem Oberbegriff mit gut reproduzierbarer, hoher Empfindlichkeit zu schaffen.

Diese Aufgabe wird erfindungsgemäss dadurch gelöst, dass die elektrisch nicht leitende Schicht metallisch ist, wobei die Nichtleitfähigkeit durch mechanische Formgebung der Schicht erzielt wird.

Mit diesem Aufbau kann gut reproduzierbar ein Widerstand mit einem K-Faktor 10 erreicht werden. Dadurch, dass die an die Widerstandsschicht angrenzende Schicht nicht elektrisch leitend ist, kann es nicht zu einem die Funktion des Widerstandes beeinträchtigenden Parallelschluss kommen.

Die nicht leitende Eigenschaft der Schicht ist z.B. dadurch erreichbar, dass diese Schicht eine sehr geringe Dicke besitzt, die die Grössenordnung von 10 A aufweist.

Eine andere Möglichkeit zum Erreichen der nicht leitenden Eigenschaft besteht darin, dass die nicht leitende Schicht inselartig aufgebaut ist, wobei die Inselabstände etwa 10 µm betragen. Die inselartige Ausbildung hat den Vorteil, dass die Dicke der Schicht weitgehend unbedeutend ist.

Besteht die Widerstandsschicht aus Chromsiliziummonoxid, so ist durch die Höhe des Siliziummonoxidanteils der Temperaturkoeffizient bestimmbar. Auf diese Weise ist eine reproduzierbare Funktionsfähigkeit des Widerstandes auch bei Temperaturen von etwa 200 °C gewährleistet.

Die nicht leitende Schicht besteht vorzugsweise aus dem gleichen Metall wie der metallische Anteil der Cermetschicht, so dass es vorteilhaft ist, dass bei einer Widerstandsschicht aus Chromsiliziumoxed die nicht leitende Schicht aus Chrom besteht.

Um eine Beeinträchtigung der elektrischen Eigenschaften der Widerstandsschicht und der nicht leitenden Schicht durch den Trägerwerkstoff zu vermeiden, kann zwischen Träger und der nicht leitenden Schicht eine Isolations- und/oder Diffusionssperrschicht angeordnet sein.

Die auf den Träger aufzubringenden Schichten können dadurch mit grosser Gleichmässigkeit in ihrer Struktur bei geringer Dicke aufgebracht werden, wenn die Widerstandsschicht und/oder die nicht leitende Schicht und/oder die Kontaktschichten und/oder die Isolations- und Diffusionssperrschicht aufgedampft sind, wobei die Widerstandsschicht vorzugsweise durch Simultandampfen aufgedampft ist.

Die Schichten können aber auch durch andere Verfahren aufgebracht werden, wobei z.B. die Widerstandsschicht und/oder die nicht leitende Schicht und/oder die Kontaktschichten und/oder die Isolations- und Diffusionssperrschicht aufgesputtert sind.

Um die Reproduzierbarkeit der K-Faktoren zu erhöhen kann der Widerstand im Vakuum wärmebehandelt sein, wobei das Vakuum zum Verhindern einer Korrosion der Schichten dient.

Eine solche Korrosion kann auch dadurch vermieden werden, dass der Widerstand in einer korrosionsverhindernden Schutzgasatmosphäre wärmebehandelt ist, oder dass der Widerstand von einer vor der Wärmebehandlung aufgebrachten Schutzschicht bedeckt ist. Die Schutzschicht kann aus Siliziumdioxid oder aus Polyimid bestehen.

Vorzugsweise ist der Widerstand etwa eine Stunde wärmebehandelt.

Der Widerstand wird bei Temperaturen von etwa 400 °C bis 600 °C, vorzugsweise bei etwa 500 °C bis 550 °C wärmebehandelt.

Die Kontaktschichten können etwa in gleicher Ebene mit geringem Abstand zur Widerstandsschicht angeordnet sein. Dies hat den Vorteil, dass der Werkstoff der als Lötkontakte dienenden Kontaktschichten, wofür Kupfer verwandt werden kann, nicht in die Widerstandsschicht hineindiffundieren und deren elektrische Eigenschaften beeinträchtigen kann.

Ausführungsbeispiele der Erfindung sind in der Zeichnung dargestellt und werden im folgenden näher beschrieben.

Es zeigen

Figur 1 ein erstes Ausführungsbeispiel eines erfindungsgemässen Widerstandes im Querschnitt

Figur 2 ein zweites Ausführungsbeispiel eines erfindungsgemässen Widerstandes im Querschnitt

Die in den Figuren dargestellten Widerstände besitzen einen Träger 1, der z.B. aus Glas oder Metall bestehen kann. Auf den Träger 1 ist eine Isolations- und Diffusionssperrschicht 2 aufgebracht, die wiederum eine metallische, nicht leitende Schicht 3 aus Chrom trägt.

Die Endbereiche der nicht leitenden Schicht 3 freilassend ist auf der nicht leitenden Schicht 3 eine Widerstandsschicht 4 aus einem Cermet-Werkstoff, nämlich Chromsiliziummonoxid angeordnet.

Auf den von der Widerstandsschicht 4 nicht bedeckten Enden der nicht leitenden Schicht 3 sind Kontaktschichten 5 aus Kupfer aufgebracht, die als Lötstellen zum Anschliessen an eine Messschaltung dienen. Zwischen den Kontaktschichten 5 und der Widerstandsschicht 4 ist ein geringer Abstand 6 vorhanden, durch den eine Diffusion von den Kontaktschichten 5 in die Widerstandsschicht 4 verhindert wird. Gleichzeitig ist der Abstand aber so gering, dass die elektrische Leitfähigkeit zwischen der Widerstandsschicht 4 und den Kontaktschichten 5 nicht beeinträchtigt wird. Dieser Abstand 6 ist besonders vorteilhaft bei feinen Strukturen der Widerstandsschicht 4.

Eine elektrisch leitende Überbrückung wird durch die mit wesentlich grösserer Dicke und damit leitfähig ausgebildeten Endbereiche der Schicht 3 erreicht.

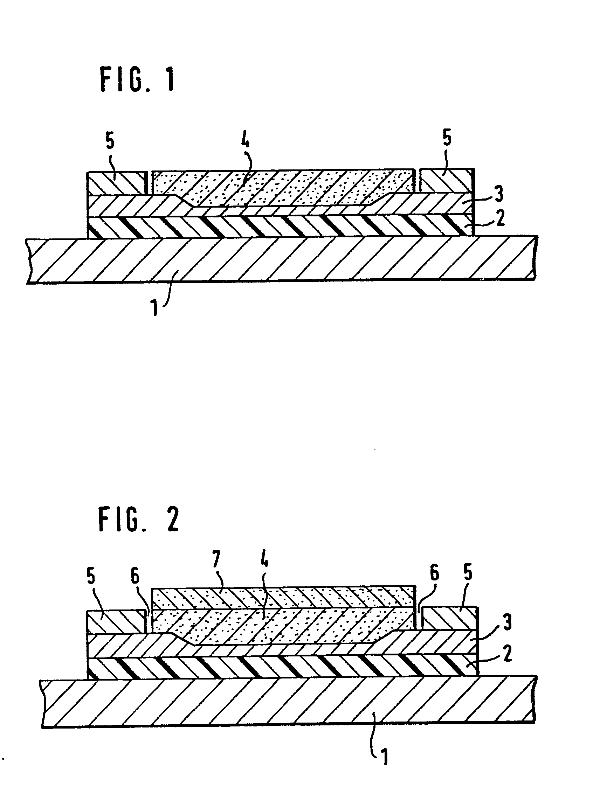

In Figur 2 ist die Widerstandsschicht 4 von einer Schutzschicht 7 bedeckt, die aus Siliziumdioxid besteht.

Diese Schutzschicht 7 dient dazu eine Korrosion der Widerstandsschicht 4 zu vermeiden, wenn der Widerstand nach dem Aufbringen der Schichten einer Wärmebehandlung unterzogen wird.

Damit es beim Ausführungsbeispiel der Figur 1 nicht zu einer Korrosion kommt, erfolgt dort die Wärmebehandlung im Vakuum oder in einer Schutzgasatmosphäre.

**Patentansprüche**

1. Elektrischer Widerstand mit einer auf einen Träger (1) aufgebrachten Widerstandsschicht (4) aus einem Cermet-Werkstoff sowie dieser Widerstandsschicht (4) zugeordneten Kontaktschichten (5), wobei zwischen Träger (1) und Widerstandsschicht (4) bzw. auf der dem Träger (1) abgewandten Seite der Widerstandsschicht (4) eine elektrisch nicht leitende Schicht (3) angeordnet ist und wobei der Widerstand einer Wärmebehandlung unterzogen ist, dadurch gekennzeichnet, dass die elektrisch nicht leitende Schicht (3) metallisch ist, wobei die Nichtleitfähigkeit durch mechanische Formgebung der Schicht (3) erzielt wird.

2. Widerstand nach Anspruch 1, dadurch gekennzeichnet, dass die nicht leitende Schicht (3) eine Dicke von etwa 10 Å besitzt.

3. Widerstand nach einem der vorhergehenden Ansprüche, dadurch gekennzeichnet, dass die nicht leitende Schicht inselartig ausgebildet ist.

4. Widerstand nach Anspruch 3, dadurch gekennzeichnet, dass die Inselabstände etwa 10 μm sind.

5. Widerstand nach einem der vorhergehenden Ansprüche, dadurch gekennzeichnet, dass die Widerstandsschicht (4) aus Chromsiliziummonoxid besteht.

6. Widerstand nach Anspruch 5, dadurch gekennzeichnet, dass die nicht leitende Schicht (3) aus Chrom besteht.

7. Widerstand nach einem der vorhergehenden Ansprüche, dadurch gekennzeichnet, dass zwischen dem Träger (1) und der nicht leitenden Schicht (3) eine Isolations- und/oder Diffusionssperrschicht (2) angeordnet ist.

8. Widerstand nach einem der vorhergehenden Ansprüche, dadurch gekennzeichnet, dass die Widerstandsschicht (4) und/oder die nicht leitende Schicht (3) und/oder die Kontaktschichten (5) und/oder die Isolations- und Diffusionssperrschicht (2) aufgedampft sind.

9. Widerstand nach einem der vorhergehenden Ansprüche, dadurch gekennzeichnet, dass die Widerstandsschicht (4) und/oder die nicht leitende Schicht (3) und/oder die Kontaktschichten (5) und/oder die Isolations- und Diffusionssperrschicht (2) aufgesputtert sind.

10. Widerstand nach einem der vorhergehenden Ansprüche, dadurch gekennzeichnet, dass der Widerstand im Vakuum wärmebehandelt ist.

11. Widerstand nach einem der Ansprüche 1–9, dadurch gekennzeichnet, dass der Widerstand in einer korrosionsverhindernden Schutzgasatmosphäre wärmebehandelt ist.

12. Widerstand nach einem der vorhergehenden Ansprüche, dadurch gekennzeichnet, dass der Widerstand von einer vor der Wärmebehandlung aufgebrachten Schutzschicht (7) bedeckt ist.

13. Widerstand nach Anspruch 12, dadurch gekennzeichnet, dass die Schutzschicht (7) aus Siliziumdioxid besteht.

14. Widerstand nach Anspruch 12, dadurch gekennzeichnet, dass die Schutzschicht (7) aus Polyimid besteht.

15. Widerstand nach einem der vorhergehenden Ansprüche, dadurch gekennzeichnet, dass der Widerstand etwa eine Stunde wärmebehandelt ist.

16. Widerstand nach einem der vorhergehenden Ansprüche, dadurch gekennzeichnet, dass der Widerstand bei etwa 400 °C bis 600 °C wärmebehandelt ist.

17. Widerstand nach einem der vorhergehenden Ansprüche, dadurch gekennzeichnet, dass der Widerstand bei etwa 500 °C bis 550 °C wärmebehandelt ist.

**Claims**

1. Electrical resistor comprising a resistive film (4) of a cermet material, which is applied to a base (1), and contact films (5), which are associated with this resistive film (4), in which an electrically non-conductive film (3) is arranged between the base (1) and the resistive film (4), or on the side of the resistive film (4) which is distant from the base (1), and the resistor is subjected to a heat treatment, characterised in that the electrically non-conductive film (3) is metallic, the non-conductivity being obtained by mechanically shaping the film (3).

2. Resistor according to claim 1, characterised in that the non-conductive film is of a thickness of approximately 10 Å.

3. Resistor according to one of the preceding claims, characterised in that the non-conductive film has an island-like formation.

4. Resistor according to claim 3, characterised in that the distance between the islands is approximately 10 μm.

5. Resistor according to one of the preceding claims, characterised in that the resistive film (4) consists of chromium-silicon monoxide.

6. Resistor according to claim 5, characterised in that the non-conductive film (3) consists of chromium.

7. Resistor according to one of the preceding claims, characterised in that an insulating and/or diffusion barrier film (2) is arranged between the base (1) and the non-conductive film (3).

8. Resistor according to one of the preceding claims, characterised in that the resistive film (4) and/or the non-conductive film (3) and/or the contact films (5) and/or the insulating and diffusion barrier film (2) are vapour-deposited.

9. Resistor according to one of the preceding claims, characterised in that the resistive film (4) and/or the non-conductive film (3) and/or the contact films (5) and/or the insulating and diffusion barrier film (2) are deposited by sputtering.

10. Resistor according to one of the preceding claims, characterised in that the resistor is heat-treated in vacuo.

11. Resistor according to one of claims 1–9, characterised in that the resistor is heat-treated in a corrosion-preventive protective atmosphere.

12. Resistor according to one of the preceding claims, characterised in that the resistor is coated with a protective film (7) which is applied before the heat treatment.

13. Resistor according to claim 12, characterised in that the protective film (7) consists of silicon dioxide.

14. Resistor according to claim 12, characterised in that the protective film (7) consists of polyimide.

15. Resistor according to one of the preceding claims, characterised in that the resistor is heat-treated for approximately one hour.

16. Resistor according to one of the preceding claims, characterised in that the resistor is heat-treated at approximately 400 °C to 600 °C.

17. Resistor according to one of the preceding claims, characterised in that the resistor is heat-treated at approximately 500 °C to 550 °C.

**Revendications**

1. Résistance électrique comportant une couche résistante (4) en matériau cermet (métal-céramique) (4) rapportée sur un support (1) ainsi que des couches de contact (5) affectées à cette couche résistante (4); une couche (3) non conductrice étant disposée entre le support (1) et la couche résistante (4), ou bien du côté de la couche résistante (4) tourné vers le support (1) et la résistance étant soumise à un traitement thermique, résistance caractérisée en ce que la couche (3) électriquement non conductrice est métallique, la non-conductibilité étant obtenue par une conformation mécanique de la couche.

2. Résistance selon la revendication 1, caractérisée en ce que la couche (3) non conductrice a une épaisseur d'environ 10 Å.

3. Résistance selon l'une quelconque des revendications précédentes, caractérisée en ce que la couche non conductrice est conformée en îlots.

4. Résistance selon la revendication 3, caractérisée en ce que les distances entre les îlots sont d'environ 10 μm.

5. Résistance selon l'une des revendications précédentes, caractérisée en ce que la couche résistante (4) est constituée par du monoxyde de chrome-silicium.

6. Résistance selon la revendication 5, caractérisée en ce que la couche non conductrice (3) est constituée par du chrome.

7. Résistance selon l'une des revendications précédentes, caractérisée en ce qu'une couche (2) d'isolation et/ou anti-diffusion est disposée entre le support (1) et la couche (3) non conductrice.

8. Résistance selon l'une des revendications précédentes, caractérisée en ce que la couche résistante (4) et/ou la couche (3) non conductrice et/ou les couches (5) de contact et/ou la couche (2) d'isolation et anti-diffusion sont déposées par vaporisation.

9. Résistance selon l'une des revendications précédentes, caractérisée en ce que la couche résistante (4) et/ou la couche (3) non conductrice et/ou les couches (5) de contact et/ou la couche (2) d'isolation anti-diffusion sont appliquées par pulvérisation.

10. Résistance selon l'une des revendications précédentes, caractérisée en ce que la résistance subit un traitement thermique sous vide.

11. Résistance selon l'une des revendications 1 à 9, caractérisée en ce que la résistance subit un traitement thermique dans une atmosphère de gaz protecteur (s) empêchant la corrosion.

12. Résistance selon l'une des revendications précédente, caractérisée en ce que la résistance est recouverte par une couche (7) de protection, rapportée avant le traitement thermique.

13. Résistance selon la revendication 12, caractérisée en ce que la couche (7) de protection est constituée par du bioxyde de silicium.

14. Résistance selon la revendication 12, caractérisée en ce que la couche (7) de protection est constituée par du polyimide.

15. Résistance selon l'une des revendications précédentes, caractérisée en ce que la résistance subit un traitement thermique d'environ une heure.

16. Résistance selon l'une des revendications précédentes, caractérisée en ce que la résistance est soumise à un traitement de chauffage approximativement entre 400 °C et 600 °C.

17. Résistance selon l'une des revendications précédentes, caractérisée en ce que la résistance est traitée par chauffage approximativement entre 500 °C et 550 °C.

## FIG. 1

## FIG. 2